# EUROPEAN PATENT APPLICATION

(11) **EP 3 996 066 A1**
(43) Date of publication of application: **11.05.2022**
(21) Application number: 20835996.8
(22) Date of filing: 23.06.2020
(51) Int. Cl.: G08G 1/04, G08G 1/16, G06T 7/00

(54) **OBJECT IDENTIFICATION DEVICE**

(30) Priority: 05.07.2019 JP 2019126199
(71) Applicant: Hitachi Astemo, Ltd., Hitachinaka-shi, Ibaraki 312-8503 (JP)
(72) Inventor: YUASA, Kazuki, Hitachinaka-shi, Ibaraki 312-8503 (JP); SHIMA, Takeshi, Hitachinaka-shi, Ibaraki 312-8503 (JP); KOBAYASHI, Masayuki, Tokyo 100-8280 (JP); NONAKA, Shinichi, Hitachinaka-shi, Ibaraki 312-8503 (JP)
(74) Representative: Mewburn Ellis LLP
(86) International application number: PCT/JP2020/024509
(87) International publication number: WO 2021/006025

(57) **Abstract**

An object identification device is realized so as to determine whether to perform bicycle identification based on an identification result of a pedestrian identifier, determine a bicycle identification region in consideration of positions and sizes of a pedestrian and a bicycle in three dimensions, and make it possible to improve bicycle detection accuracy without increasing a processing load. An object identification device 101 includes an imaging unit 102, a three-dimensional object detection unit 103, a feature amount extraction unit 104 that extracts a feature amount from an image of an imaged object, and an identification processing unit 105. The identification processing unit 105 includes a pedestrian identification unit 106 and a bicycle identification unit 107. The pedestrian identification unit 106 includes a pedestrian identification region setting unit 108 and a pedestrian identification unit 109 for determining whether an image of the pedestrian identification region is a pedestrian. The bicycle identification unit 107 includes a bicycle identification region setting unit 110 that determines an identification region of a bicycle in a three-dimensional coordinate space when the pedestrian identification unit 109 determines that the image of the pedestrian identification region is a pedestrian, and a bicycle identification unit 111 that determines whether the image of the identification region of the bicycle is a bicycle and identifies the bicycle.

## Description

### Technical Field

The present invention relates to an object identification device mounted on a vehicle or the like.

### Background Art

In recent years, an in-vehicle camera has been increasingly used in a driving assistance device for preventing an accident in advance, an automatic driving device controlled by a machine, and the like, instead of a vehicle operated by a driver.

In the driving assistance device, it is necessary to detect more objects having a possibility of collision, and among them, a function of detecting pedestrians and bicycles which are vulnerable road users is important.

As a technique for detecting a transverse bicycle in front of a vehicle, there is a technique described in Patent Literature 1.

### Citation List

### Patent Literature

PTL 1: JP 2013-232080 A

### Summary of Invention

### Technical Problem

However, in the technique described in PTL 1, since only the relative positions of the multiple pedestrians and the respective parts are considered, when the pedestrian crosses in front of the left bicycle, the pedestrian is erroneously detected as a cyclist (a bicycle including a driver).

Then, a determination region for a cyclist is set regardless of the pedestrian, and the operation of the own vehicle is controlled. Therefore, it is difficult to perform highly accurate motion control on the target object.

Therefore, an object of the present invention is to realize an object identification device which determines whether to perform bicycle identification based on an identification result of a pedestrian identifier, determines a bicycle identification region in consideration of positions and sizes of a pedestrian and a bicycle in three dimensions, and makes it possible to improve bicycle detection accuracy without increasing a processing load.

### Solution to Problem

In order to achieve the above object, the present invention is configured as follows.

An object identification device includes: a feature amount extraction unit that extracts a feature amount from an image of an object captured by an imaging unit; a pedestrian identification region setting unit that sets a pedestrian identification region of an image of an object captured by the imaging unit; a pedestrian identification unit that determines whether an image of the pedestrian identification region set by the pedestrian identification region setting unit is a pedestrian using the feature amount; a bicycle identification region setting unit that sets an identification region of a bicycle in a three-dimensional coordinate space from an image of the pedestrian identification region when the pedestrian identification unit determines that the image of the pedestrian identification region is a pedestrian; and a bicycle identification unit that determines whether an image of an identification region of the bicycle defined by the bicycle identification region setting unit is a bicycle by using the feature amount and identifies the bicycle.

### Advantageous Effects of Invention

According to the present invention, it is possible to realize an object identification device which determines whether to perform bicycle identification based on an identification result of a pedestrian identifier, determines a bicycle identification region in consideration of positions and sizes of a pedestrian and a bicycle in three dimensions, and makes it possible to improve bicycle detection accuracy without increasing a processing load.

### Brief Description of Drawings

[FIG. 1] FIG. 1 is a block diagram when Example 1 of the present invention is applied to an object identification device mounted on a vehicle.
[FIG. 2] FIG. 2 is a flowchart illustrating processing in the object identification device according to Example 1.
[FIG. 3] FIG. 3 is a flowchart illustrating processing in an identification processing unit according to Example 1.
[FIG. 4] FIG. 4 is a diagram illustrating another example of a flowchart illustrating processing in the identification processing unit illustrated in FIG. 3.
[FIG. 5] FIG. 5 is a diagram illustrating an example in which an expansion amount is uniformly determined in an image space for a bicycle moving in a distorted captured image.
[FIG. 6] FIG. 6 is a flowchart illustrating processing in a bicycle identification region setting unit of Example 1.
[FIG. 7] FIG. 7 is a diagram illustrating an example in which a bicycle identification region is set by the bicycle identification region setting unit for a bicycle moving in a distorted captured image.
[FIG. 8] FIG. 8 is a flowchart illustrating processing in a bicycle position detection unit.
[FIG. 9] FIG. 9 is an explanatory diagram of an example in which a wheel determination region is determined from the bicycle identification region.
[FIG. 10] FIG. 10 is a diagram illustrating an example in which a relationship between center coordinates of both bicycle wheels is classified into three patterns.
[FIG. 11] FIG. 11 is a diagram illustrating an example in which an upper body determination region is determined from a pedestrian identification region.
[FIG. 12] FIG. 12 is a block diagram illustrating an object recognition device in a case where Example 2 of the present invention is applied to an in-vehicle camera.
[FIG. 13] FIG. 13 is a table illustrating a traveling direction of a bicycle which is determined from a both-wheel pattern determination result and an upper body pattern determination result.

### Description of Embodiments

Hereinafter, an embodiment in which the present invention is applied to an in-vehicle camera will be described with reference to the drawings.

### Examples

### (Example 1)

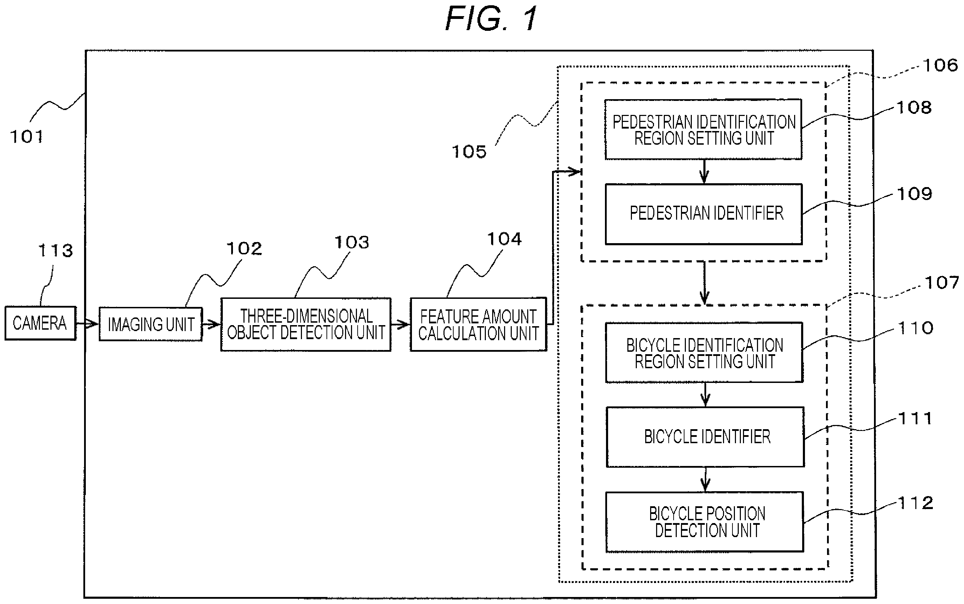

FIG. 1 is a block diagram when Example 1 of the present invention is applied to an object identification device mounted on a vehicle. As illustrated in FIG. 1, the object identification device 101 includes an imaging unit 102 that sets an optimum exposure parameter and captures an image by a camera 113 mounted on a vehicle, and a three-dimensional object detection unit 103 that detects a three-dimensional object from an image captured by the imaging unit 102.

Further, the object identification device 101 includes a feature amount calculation unit (feature amount extraction unit) 104 that calculates an image feature amount in a region widely including the three-dimensional object detection region detected by the three-dimensional object detection unit 103, and an identification processing unit 105 that performs identification using the feature amount calculated by the feature amount calculation unit 104.

The identification processing unit 105 includes a pedestrian identification unit 106 that identifies a pedestrian and a bicycle identification unit 107 that identifies a bicycle.

The pedestrian identification unit 106 includes a pedestrian identification region setting unit 108 that sets a pedestrian identification region and a pedestrian identifier (pedestrian identification unit) 109 that determines whether the image region set by the pedestrian identification region setting unit 108 is a pedestrian.

Further, the bicycle identification unit 107 includes a bicycle identification region setting unit 110 that sets an identification region of a bicycle, a bicycle identifier (bicycle identification unit) 111 that determines whether the image region set by the bicycle identification region setting unit 110 is a bicycle, and a bicycle position detection unit 112 that obtains a traveling direction and a detection region of the bicycle from a result of identification by the bicycle identifier 111.

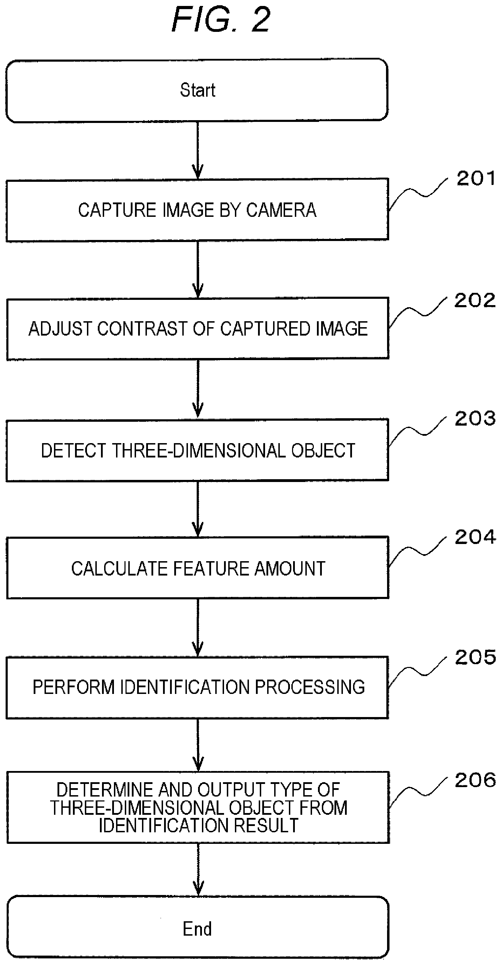

FIG. 2 is a flowchart illustrating processing in the object identification device 101.

The operation based on the flowchart of FIG. 2 is as follows.

Step 201: An optimum exposure parameter of a frame to be imaged this time is calculated from a frame previously imaged by the imaging unit 102 using the camera 113 mounted on the vehicle, and an image imaged by the parameter is acquired. For example, the camera 113 may include an imaging element such as a complementary metal oxide semiconductor (CMOS) or a charge coupled device image sensor (CCD).

Step 202: The contrast of the image acquired in Step 201 is corrected by the imaging unit 102.

Step 203: A three-dimensional object is detected from the image obtained by the imaging unit 102. For example, for three-dimensional object detection, an optical flow of a frame F(t) imaged at the current time and a frame F(t - 1) imaged one frame before is calculated by a known method, and image regions of flows having substantially the same amount of movement in the same direction are grouped to detect a moving three-dimensional object.

Step 204: The feature amount calculation unit 104 calculates an image feature amount of a region obtained by giving a margin to the three-dimensional object region obtained in Step 203. For example, the feature amount may be a known method, and the image feature amount may be an HOG (Histograms of Oriented Gradients) feature amount in which a luminance gradient direction is formed into a histogram in a local region obtained by dividing a luminance gradient image by H × V, or a Haar-like feature amount in which an average luminance difference between two regions in a local region of a luminance image is a feature amount.

Step 205: The identification processing unit 105 calculates a degree of similarity (identification score) between the feature amount calculated in Step 204 and the identifier previously learned and constructed with the training image, and outputs the type of the three-dimensional object to be identified when the degree of similarity is equal to or greater than a threshold value.

Step 206: When the same three-dimensional object has the same type in a plurality of frames, the type of the three-dimensional object is determined and output. By determining the type in a plurality of frames, the type accuracy is increased, and there is an effect of preventing erroneous vehicle control.

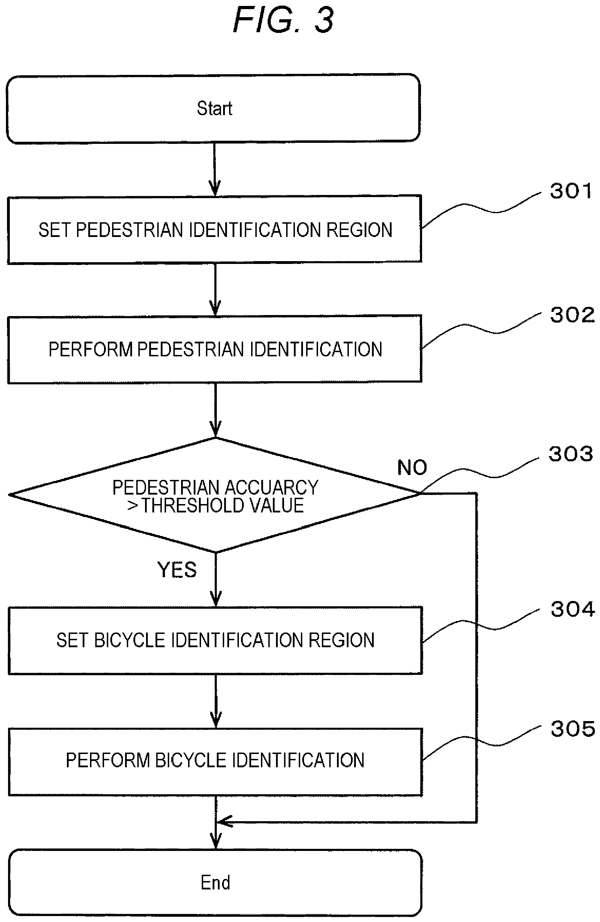

FIG. 3 is a flowchart illustrating processing in the identification processing unit 105.

The operation based on the flowchart of FIG. 3 is as follows.

Step 301: A region obtained by expanding the three-dimensional object detection region detected by the three-dimensional object detection unit 103 by a threshold value or more by the pedestrian identification region setting unit 108 is set as a pedestrian identification region. For example, the threshold value of the extension area is set to 15%.

Step 302: By using the pedestrian identifier 109 in which the image of the pedestrian identification region set in Step 301 is learned in advance by the training image, pedestrian identification for determining whether a pedestrian is present is performed from the feature amount calculated by the feature amount calculation unit 104. For example, the pedestrian identification region set in Step 301 may be raster-scanned to calculate the pedestrian identification score. In addition, not only a pedestrian but also a cyclist who is a driver of a bicycle may be added to the training image of the pedestrian identifier 109. By adding the cyclist to the training image, the cyclist can also be identified as a pedestrian.

Step 303: If the pedestrian identification score calculated in Step 302 is equal to or greater than the threshold value, it is determined that the pedestrian is a pedestrian or the cyclist riding on the bicycle (the cyclist can be identified as a pedestrian), and the processing of the bicycle identification unit 107 is performed. If the pedestrian identification score calculated in Step 302 is equal to or less than the threshold value, the processing of the bicycle identification unit 107 is not performed, and the type is output as the background.

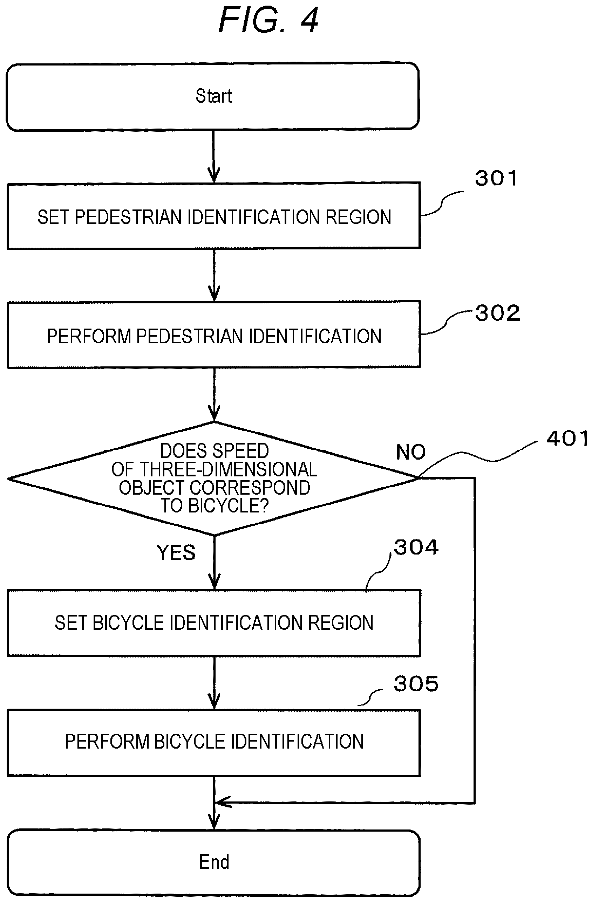

FIG. 4 is a diagram illustrating another example of a flowchart illustrating processing in the identification processing unit 105 illustrated in FIG. 3. A difference between the flowchart illustrated in FIG. 3 and the flowchart illustrated in FIG. 4 is that Step 303 in FIG. 3 is Step 401 in the example of FIG. 4. The other steps are similar to those in FIGS. 3 and 4.

As in Step 401 in the example of FIG. 4, the processing of the bicycle identification unit 107 may be determined by calculating the speed of the three-dimensional object using the result of tracking the three-dimensional object in a plurality of frames by the three-dimensional object detection unit 103 and determining whether the speed of the three-dimensional object to be identified corresponds to the moving speed of the bicycle.

Step 304: In a case where it is determined in Step 303 that the processing of the bicycle identification unit 107 is to be performed, the bicycle identification region setting unit 110 expands the frame to the left and right in the three-dimensional space based on the identification region of the pedestrian, and then converts the expanded left and right three-dimensional space coordinates into image space coordinates, thereby defining the bicycle identification region.

Step 305: The image of the bicycle identification region calculated in Step 304 is identified from the feature amount calculated by the feature amount calculation unit 104 using the bicycle identifier 111 learned in advance from the training image. For example, the bicycle identification region set in Step 304 may be raster-scanned to calculate the bicycle identification score. When the bicycle identification score of the bicycle identifier 111 in the image of the bicycle identification region exceeds the threshold value, the type is identified and output as a bicycle, and when the bicycle identification score is equal to or less than the threshold value, the type is identified and output as a pedestrian.

By determining whether to perform the processing of the bicycle identification unit 107 based on the pedestrian identification score, there is an effect that the number of times of identifying the bicycle for all the three-dimensional objects is reduced and the processing load is reduced.

In addition, by performing identification in stages, there is an effect that it is possible to solve the problem that it is difficult to determine the type in a case where the identification scores of the identifiers of the pedestrian and the bicycle are the same value.

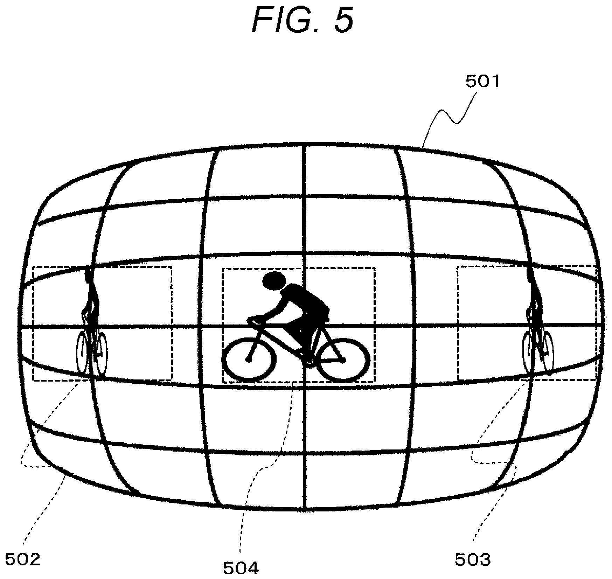

FIG. 5 is a diagram illustrating an example in which an expansion amount is uniformly determined on an image space for a bicycle moving from right to left in a distorted captured image such as a fisheye camera.

In FIG. 5, in the captured image 501 with distortion, the angular resolution of one pixel is different between the view angle center and the angle-of-view end. Therefore, if the expansion amount is uniformly determined on the image space, a frame including a large amount of extra region other than the bicycle is set in the bicycle (for example, right end bicycle identification region 503 and left end bicycle identification region 502) shown at the angle-of-view end as compared with a central bicycle identification region 504 with less distortion, and the bicycle identification performance is deteriorated.

Therefore, in the bicycle identification region setting unit 110, an area where the bicycle identification is performed in the three-dimensional space is determined, and the area determined in the three-dimensional space is converted into image space coordinates, thereby setting the bicycle identification region in consideration of the distortion.

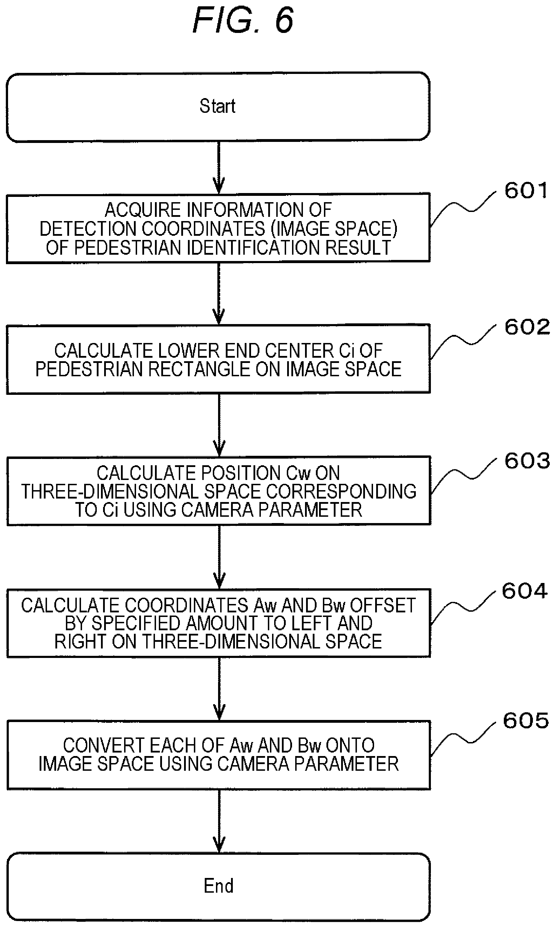

FIG. 6 is a flowchart illustrating processing in the bicycle identification region setting unit 110.

The operation based on the flowchart of FIG. 6 is as follows.

Step 601: As a result of performing pedestrian identification by the pedestrian identification unit 106, pedestrian detection coordinates on the image space determined as a pedestrian are acquired.

Step 602: The lower end center Ci of the pedestrian detection coordinates (the center of the lower end portion of the pedestrian rectangle) is calculated from the pedestrian detection coordinates acquired in Step 601. Here, the lower end center Ci is the foot position center of the pedestrian, and its coordinate value is used to calculate the distance between the object identification device 101 and the three-dimensional object as the bicycle identification target.

Step 603: The image coordinates of the lower end center Ci are converted into the corresponding position Cw in the three-dimensional space by a known method using camera parameters (for example, an installation height and an attachment angle of the camera 113, the number of pixels, a lens model, and the like).

Step 604: Coordinates Aw and Bw obtained by offsetting the position Cw in the three-dimensional space obtained in Step 603 to the left and right by a specified amount are calculated. For example, the offset amount is set to the size of the bicycle prescribed by law.

Step 605: The position coordinates Aw and Bw in the three-dimensional space obtained in Step 604 are each converted into coordinate values in the image space using a known method using camera parameters.

By setting the bicycle identification region using the camera parameter, for example, there is an effect that the bicycle identification region can be easily set by correcting the camera parameter even if the installation position of the camera changes.

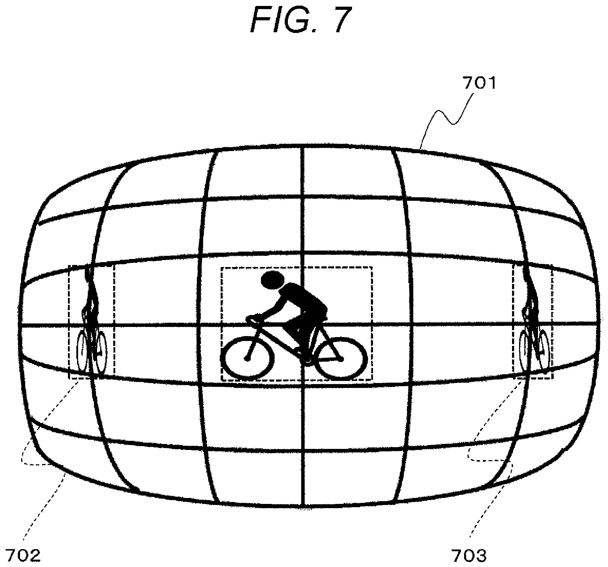

FIG. 7 is a diagram illustrating an example in which the bicycle identification region is set by the bicycle identification region setting unit 110 for a bicycle moving from right to left in a distorted captured image such as a fisheye camera.

In FIG. 7, even in a distorted captured image 701, setting the bicycle identification region in a three-dimensional space enables region setting (for example, right end bicycle identification region 703 and left end bicycle identification region 702) in consideration of the distortion.

The bicycle identification region set by the bicycle identification region setting unit 110 is not the bicycle identification regions 502 and 503 including the extra region as illustrated in FIG. 5. Therefore, there is an effect that the bicycle identification accuracy is improved particularly at the angle-of-view end with large distortion.

In addition, by defining the bicycle identification region in three dimensions, it is possible to define the bicycle identification region in consideration of the positions and sizes of the pedestrian and the bicycle. Therefore, even in an example in which a pedestrian crosses in front of an unattended bicycle, there is an effect of correctly detecting the pedestrian as a pedestrian and preventing erroneous identification.

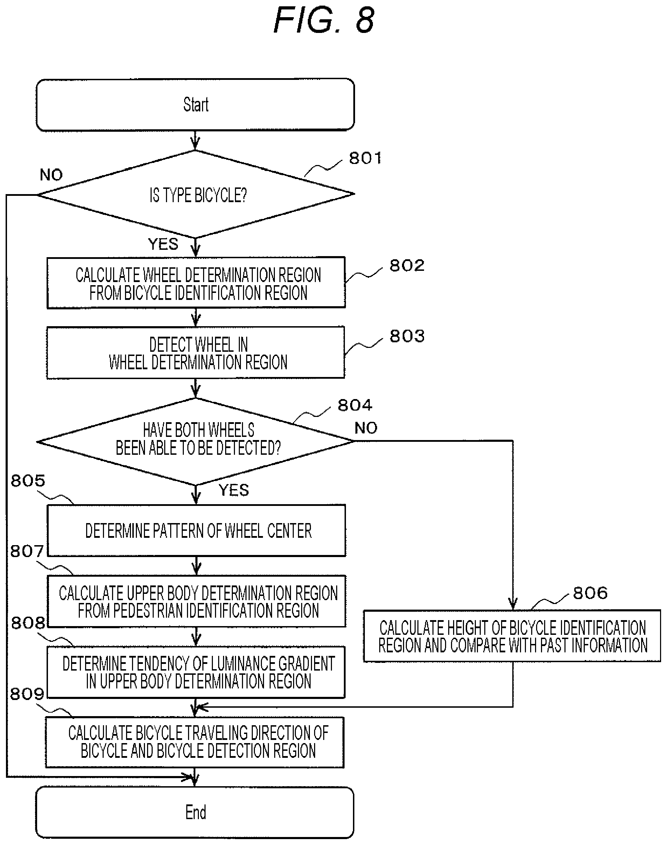

FIG. 8 is a flowchart illustrating processing in the bicycle position detection unit 112.

The operation based on the flowchart of FIG. 8 is as follows.

The bicycle position detection unit 112 obtains the detection region including the front wheel of the bicycle, the rear wheel of the bicycle, and the driver of the bicycle.

Step 801: As a result of performing the bicycle identification by the bicycle identifier 111, it is determined whether the bicycle identification score is equal to or greater than a threshold value. If the bicycle identification score is equal to or less than the threshold value, there is a high possibility that the three-dimensional object is a pedestrian, and thus the process ends and the bicycle position detection process is not performed.

Step 802: A wheel determination region is calculated using the bicycle identification region determined by the bicycle identification region setting unit 110.

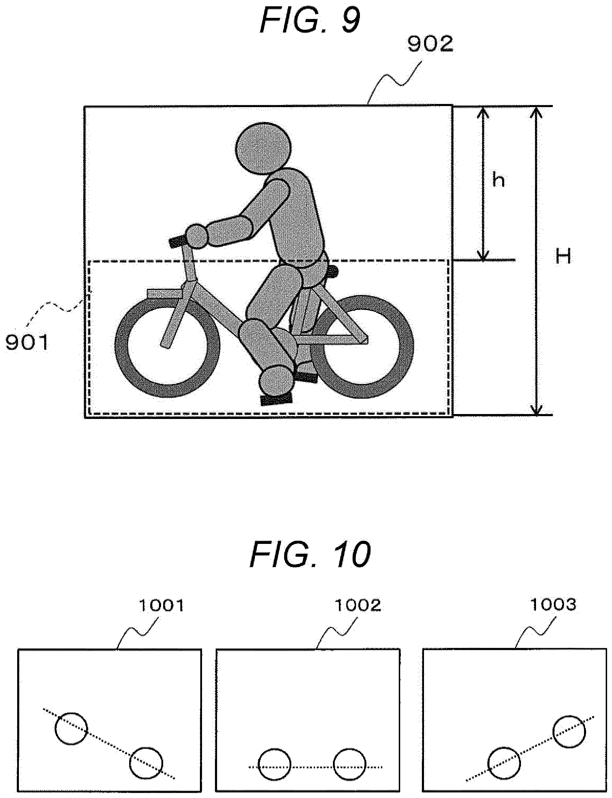

FIG. 9 is an explanatory diagram of an example in which a wheel determination region is determined from a bicycle identification region.

In FIG. 9, a wheel determination region 901 defines a height h obtained by multiplying the bicycle identification region height H by a designated magnification from the upper end of a bicycle identification region 902 as an area offset in the lower end direction of the bicycle identification region 902.

Step 803: In the wheel determination region 901 set in Step 802, the wheel is detected using circle detection or ellipse detection which is a known method.

Step 804: In Step 803, it is determined whether both wheels have been detected in the wheel determination region 901. For example, when the moving direction of the bicycle is other than the front direction and the back direction with respect to object identification device 101, both wheels can be detected. When the detection cannot be made, there is a high possibility that the moving direction of the bicycle is the front direction or the back direction with respect to the object identification device 101.

Step 805: In a case where both wheels can be detected in Step 804, the center coordinates of both wheels are obtained, and classified into a plurality of patterns from the positional relationship between the center coordinates of both wheels, and a candidate of the movement state is obtained from the relationship between both wheels.

FIG. 10 is a diagram illustrating an example in which the relationship between the center coordinates of both bicycle wheels is classified into three patterns. In FIG. 10, in a pattern 1001, when the right and left wheel centers are compared in the vertical direction, there is a relationship that the wheel center coordinates on the left side of the wheel determination region are high and the wheel center coordinates on the right side are low. In this case, the bicycle is divided into a state of approaching the object identification device 101 in the rightward oblique direction and a state of separating the bicycle from the object identification device 101 in the leftward oblique direction.

In the pattern 1002, when the right and left wheel centers are compared in the vertical direction, there is a relationship in which the wheel center coordinates on the left side and the wheel center coordinates on the right side of the wheel determination region are equal. In this case, the bicycle is divided into a state in which the bicycle moves rightward in parallel with the object identification device 101 and a state in which the bicycle moves leftward in parallel with the object identification device 101.

In the pattern 1003, when the right and left wheel centers are compared in the vertical direction, there is a relationship that the wheel center coordinates on the left side of the wheel determination region are low and the wheel center coordinates on the right side are high. In this case, the bicycle is divided into a state of separating the object identification device 101 in the rightward oblique direction and a state of approaching the bicycle from the object identification device 101 in the leftward oblique direction.

Step 806: When both wheels cannot be detected in Step 804, the magnitude relationship of the heights is compared from the height information of the past bicycle identification region and the height information of the current bicycle identification region.

Step 807: The upper body determination region is calculated using the pedestrian identification region determined by the pedestrian identification region setting unit 108.

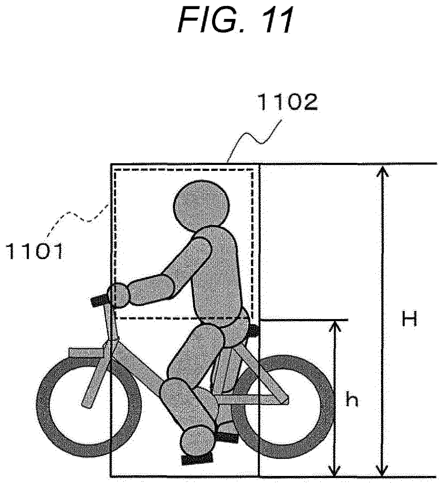

FIG. 11 is a diagram illustrating an example in which an upper body determination region is determined from a pedestrian identification region.

In FIG. 11, in an upper body determination region 1101, the height h obtained by multiplying a pedestrian identification region height H by the designated magnification from the lower end of a pedestrian identification region 1102 is set as a region offset in the upper end direction of the pedestrian identification region.

Step 808: In the upper body determination region obtained in Step 807, a histogram of the luminance gradient within the designated angle is created, and classified into a plurality of patterns from the tendency of the histogram. For example, the angle distribution range of the arm of the driver of the bicycle set in advance is compared with the histogram of the detected luminance gradient in the upper body determination region, and classified into two patterns of whether the upper body faces the right direction or the left direction.

Step 809: In a case where both wheels can be detected in Step 803, the traveling direction of the bicycle is calculated using the both-wheel pattern determination result determined in Step 805 and the upper body pattern determination result determined in Step 808.

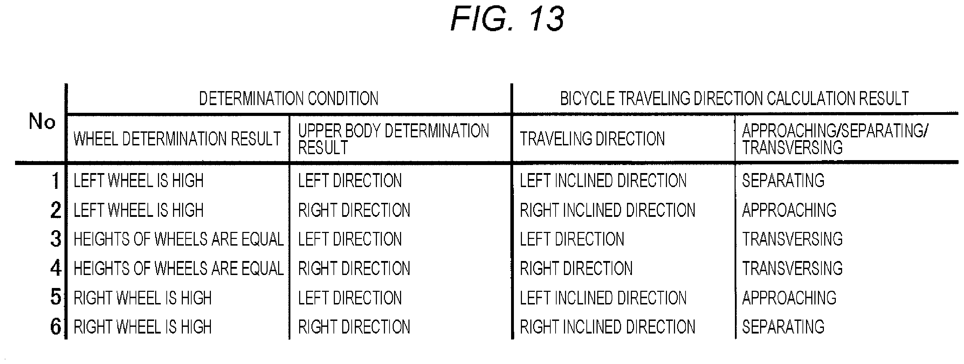

FIG. 13 is a table illustrating the traveling direction of the bicycle determined from the both-wheel pattern determination result and the upper body pattern determination result. As illustrated in FIG. 13, for example, the traveling direction of the bicycle can be divided into six patterns from the relationship between the determined both-wheel pattern determination result and the upper body pattern determination result. In a case where both wheels cannot be detected in Step 803, from the magnitude relationship between the past height information of the bicycle identification region 902 and the current height of the bicycle identification region 902 obtained in Step 806, it is determined that the bicycle is relatively close to the object identification device 101 when the magnitude relationship shows increasing in the height direction, and it is determined that the bicycle is relatively separated from the object identification device 101 when the magnitude relationship shows large in the height direction.

In the calculation of the bicycle detection region, when both wheels can be detected in Step 803, the horizontal width of the detection region of the bicycle is calculated from the parameters of the wheels of both wheels obtained in Step 803, and the vertical width of the detection region of the bicycle is set to the height determined by the pedestrian identification region setting unit 108.

In addition, in a case where both wheels cannot be detected in Step 803, both the horizontal width and the vertical width are set to the sizes determined by the pedestrian identification region setting unit 108.

In the bicycle position detection unit 112, the detection position of the bicycle is obtained with higher accuracy than the moving direction of the bicycle and the region determined by the bicycle identification region setting unit 110, so that it is possible to predict the region where the bicycle exists in the next frame with high accuracy. The speed of the bicycle is stably obtained, so that there is an effect that the performance of the collision determination processing is improved.

According to Example 1 of the present invention, since it is configured to determine whether a pedestrian is a cyclist or a pedestrian crossing an unattended bicycle from the position size of the pedestrian and the bicycle in three dimensions after identifying the pedestrian, it is possible to realize the object identification device capable of improving the bicycle detection accuracy without increasing the processing load.

### (Example 2)

Next, Example 2 of the present invention will be described.

Example 2 of the present invention is an example in which the feature amount calculation unit 104 in Example 1 is provided in the pedestrian identification unit 106 that identifies a pedestrian and the bicycle identification unit 107 that identifies a bicycle.

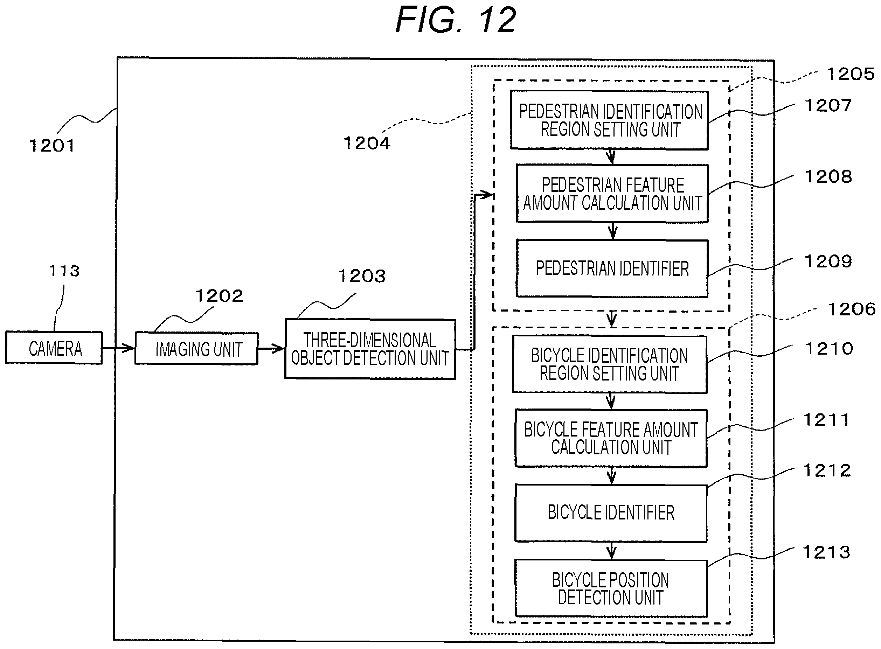

FIG. 12 is a block diagram illustrating an object recognition device 1201 in a case where Example 2 of the present invention is applied to an in-vehicle camera.

In FIG. 12, the object identification device 1201 includes an imaging unit 1202 that sets an optimum exposure parameter and captures an image by a camera 113 mounted on the vehicle, a three-dimensional object detection unit 1203 that detects a three-dimensional object from the captured image, and an identification processing unit 1204 that performs identification.

In addition, the identification processing unit 1204 includes a pedestrian identification unit 1205 that identifies a pedestrian and a bicycle identification unit 1206 that identifies a bicycle.

The pedestrian identification unit 1205 includes a pedestrian identification region setting unit 1207 that sets a pedestrian identification region in an image region of a three-dimensional object detection region detected by the three-dimensional object detection unit 1203, a pedestrian feature amount calculation unit (pedestrian feature amount extraction unit) 1208 that calculates (extracts) a feature amount of a pedestrian from the image region set by the pedestrian identification region setting unit 1207, and a pedestrian identifier (pedestrian identification unit) 1209 that determines whether the image is a pedestrian from the feature amount obtained by the pedestrian feature amount calculation unit 1208.

Further, the bicycle identification unit 1206 includes a bicycle identification region setting unit 1210 that defines an identification region of the bicycle, a bicycle feature amount calculation unit (bicycle feature amount extraction unit) 1211 that calculates (extracts) a feature amount of the bicycle from the identification region of the bicycle defined by the bicycle identification region setting unit 1210, a bicycle identifier (bicycle identification unit) 1212 that determines whether the image is the bicycle from the feature amount obtained by the bicycle feature amount calculation unit 1211 and identifies the bicycle, and a bicycle position detection unit 1213 that obtains a traveling direction of the bicycle and a detection region from a result of identification by the bicycle identifier (bicycle identification unit) 1212.

In Example 1, the feature amount calculation unit 104 calculates a feature amount common to a pedestrian and a bicycle.

On the other hand, in Example 2, the pedestrian feature amount calculation unit 1208 is provided in the pedestrian identification unit 1205 for identifying a pedestrian, and the bicycle feature amount calculation unit 1211 is provided in the bicycle identification unit 1206 for identifying a bicycle.

The other configurations are similar between Example 1 and Example 2.

According to Example 2, an effect similar to that of Example 1 can be obtained, and in addition, since the feature amount used for the pedestrian and the bicycle can be changed, there is an effect that the identification accuracy can be improved.

In addition, there is an effect that the calculation cost can be reduced by calculating the feature amount only at the place where the identification region is set.

Further, the present invention is not limited to the embodiments described above, but includes various modifications. For example, the above embodiments have been described in detail for easy understanding of the present invention, and the present invention is not necessarily limited to having all the configurations described.

Further, it is possible to add the configuration of Example 2 to the configuration of Example 1.

In addition, the above-described example is an example in a case where the present invention is applied to an object identification device mounted on a vehicle, but the present invention can be applied not only to a vehicle but also to, for example, a monitoring camera installed on a road. Reference Signs List

101,1201 object identification device
102,1202 imaging unit
103,1203 three-dimensional object detection unit
104 feature amount calculation unit (feature amount extraction unit)
105,1204 identification processing unit
106,1205 pedestrian identification unit
107,1206 bicycle identification unit
108,1207 pedestrian identification region setting unit
109, 1209 pedestrian identifier (pedestrian identification unit)
110,1210 bicycle identification region setting unit
111,1212 bicycle identifier (bicycle identification unit)
112,1213 bicycle position detection unit
113 camera
502,503,504 bicycle identification region
1208 pedestrian feature amount calculation unit (pedestrian feature amount extraction unit)
1211 bicycle feature amount calculation unit (bicycle feature amount extraction unit)

## Claims

1. An object identification device, comprising:
a feature amount extraction unit that extracts a feature amount from an image of an object captured by an imaging unit;
a pedestrian identification region setting unit that sets a pedestrian identification region of an image of an object captured by the imaging unit;
a pedestrian identification unit that determines whether an image of the pedestrian identification region set by the pedestrian identification region setting unit is a pedestrian using the feature amount;
a bicycle identification region setting unit that sets an identification region of a bicycle in a three-dimensional coordinate space from an image of the pedestrian identification region when the pedestrian identification unit determines that the image of the pedestrian identification region is a pedestrian; and
a bicycle identification unit that determines whether an image of an identification region of the bicycle defined by the bicycle identification region setting unit is a bicycle by using the feature amount and identifies the bicycle.

2. The object identification device according to claim 1, wherein
the feature amount extraction unit includes a pedestrian feature amount extraction unit that extracts a feature amount of a pedestrian from the pedestrian identification region determined by the pedestrian identification region setting unit, and a bicycle feature amount extraction unit that extracts a feature amount of a bicycle from the bicycle identification region determined by the bicycle identification region setting unit,
the pedestrian identification unit determines whether the image of the pedestrian identification region is a pedestrian from the feature amount of the pedestrian extracted by the pedestrian feature amount extraction unit, and
the bicycle identification unit determines whether the image of the bicycle identification region is a bicycle from the feature amount extracted by the bicycle feature amount extraction unit.

3. The object identification device according to claim 1 or 2, comprising a bicycle position detection unit that obtains a traveling direction and a detection region of the bicycle identified by the bicycle identification unit.

4. The object identification device according to claim 3, wherein the bicycle position detection unit obtains the detection region including a front wheel of the bicycle, a rear wheel of the bicycle, and a driver of the bicycle.

5. The object identification device according to claim 1 or 2, wherein the object identification device is mounted on a vehicle.
